# EUROPEAN PATENT APPLICATION

(11) **EP 4 481 935 A1**
(43) Date of publication of application: **25.12.2024**
(21) Application number: 23756067.7
(22) Date of filing: 18.01.2023
(51) Int. Cl.: H01M 50/569

(54) **VOLTAGE DETECTION DEVICE AND BATTERY MODULE**

(30) Priority: 17.02.2022 JP 2022022636
(71) Applicant: AESC Japan Ltd., Kanagawa, 2520012 (JP)
(72) Inventor: IZAWA, Takami, Zama-shi, Kanagawa 252-0012 (JP); AMAGAI, Ryuichi, Zama-shi, Kanagawa 252-0012 (JP); NAKAI, Masayuki, Zama-shi, Kanagawa 252-0012 (JP); TOYOSAKI, Shinkichi, Zama-shi, Kanagawa 252-0012 (JP); YANAGIHARA, Yasuhiro, Zama-shi, Kanagawa 252-0012 (JP)
(74) Representative: Mathys & Squire
(86) International application number: PCT/JP2023/001283
(87) International publication number: WO 2023/157539

(57) **Abstract**

A first voltage detection device (30A) includes: a first voltage detection portion (310A); and a first shaft member (340A) extending through a part of the first voltage detection portion (310A). The first voltage detection portion (310A) includes a first ridge (318A) located at least partially around a first through hole (312aA) of the first voltage detection portion (310A) through which the first shaft member (340A) extends.

## Description

### TECHNICAL FIELD

The present invention relates to a voltage detection device and a battery module.

### BACKGROUND ART

A battery module such as a lithium-ion secondary battery may include a plurality of stacked battery cells. In such a battery module, a plurality of battery cells is electrically connected to each other by a positive lead and a negative lead being drawn from an exterior material of the battery cell.

Patent Document 1 describes one example of a battery module. In the battery module, a positive lead of one battery cell and a negative lead of another battery cell are bonded to each other. Thus, the one battery cell and the another battery cell are electrically connected to each other via a lead portion including the positive lead and the negative lead bonded to each other.

Patent Documents 2 and 3 describe one example of a battery module. In the battery module, a positive lead of one battery cell and a negative lead of another battery cell are electrically connected to each other via a bus bar.

Patent Document 4 describes one example of a battery module. In the battery module, a positive fastening terminal welded to a positive lead of one battery cell and a negative fastening terminal welded to a negative lead of another battery cell are electrically connected to each other.

### RELATED DOCUMENT

### PATENT DOCUMENT

Patent Document 1: Japanese Patent Application Publication No. 2020-47435
Patent Document 2: Japanese Patent Application Publication No. 2017-84465
Patent Document 3: Japanese Patent Application Publication (Translation of PCT Application) No. 2014-516457
Patent Document 4: Japanese Patent Application Publication No. 2020-87721

### SUMMARY OF INVENTION

### TECHNICAL PROBLEM

A battery module may include a voltage detection device including a voltage detection portion electrically connected to at least one battery cell. In the voltage detection device, a shaft member may extend through a part of the voltage detection portion. In this structure, the voltage detection portion is movably supported along the shaft member. In this structure, however, the voltage detection portion may wobble with respect to the shaft member.

One example of an object of the present invention is to suppress wobbling of a voltage detection portion. Another object of the present invention will become apparent from the description of the present specification.

### SOLUTION TO PROBLEM

One aspect of the present invention is a voltage detection device including:
a voltage detection portion; and
a shaft member extending through a part of the voltage detection portion, wherein
the voltage detection portion includes a ridge located at least partially around a through hole of the voltage detection portion through which the shaft member extends.

Another aspect of the present invention is a voltage detection device including:
a voltage detection portion;
a shaft member extending through a part of the voltage detection portion; and
a structure opposite to at least a part of the voltage detection portion in a circumferential direction about the shaft member.

Still another aspect of the present invention is a battery module including:
the voltage detection device; and
at least one battery cell electrically connected to the voltage detection portion.

### ADVANTAGEOUS EFFECTS OF INVENTION

According to the above-described aspects of the present invention, wobbling of a voltage detection portion can be suppressed.

### BRIEF DESCRIPTION OF THE DRAWINGS

[Fig. 1] A perspective view of a battery module according to an embodiment when viewed from the front.
[Fig. 2] A perspective view of the battery module according to the embodiment when viewed from the rear.
[Fig. 3] A diagram with a housing body removed from Fig. 1.
[Fig. 4] A diagram with the housing body removed from Fig. 2.
[Fig. 5] A perspective view of a cell stack body according to the embodiment when viewed from the front.
[Fig. 6] An enlarged perspective view of a part of the battery module according to the embodiment when viewed from the front.
[Fig. 7] An enlarged view of a position of a first voltage detection device according to the embodiment in which a first fuse device is provided.

### DESCRIPTION OF EMBODIMENTS

Hereinafter, embodiments of the present invention will be described by using drawings. In all of the drawings, a similar component has a similar reference sign, and description thereof will be appropriately omitted.

In the present specification, an ordinal numeral such as "first", "second", and "third" is provided for simply distinguishing a configuration provided with a similar name unless otherwise specified and does not indicate a specific characteristic (for example, an order or importance) of a configuration.

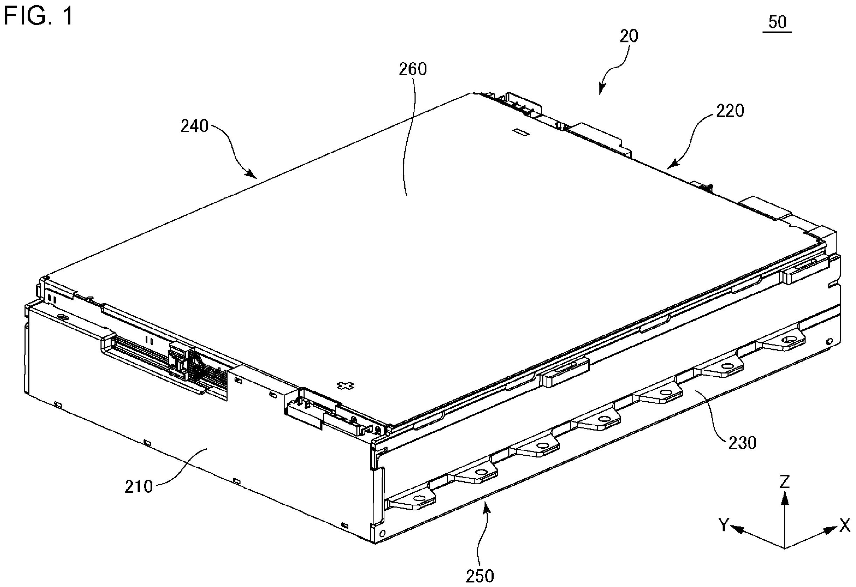

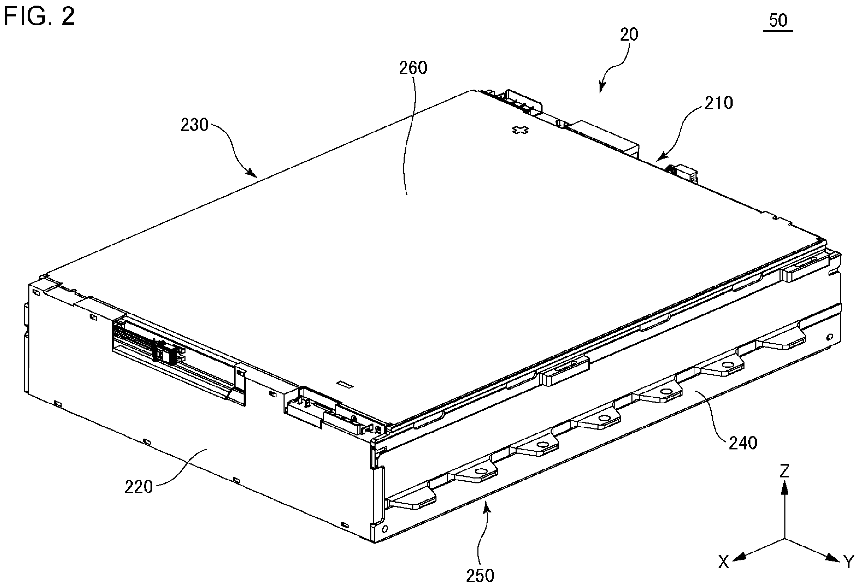

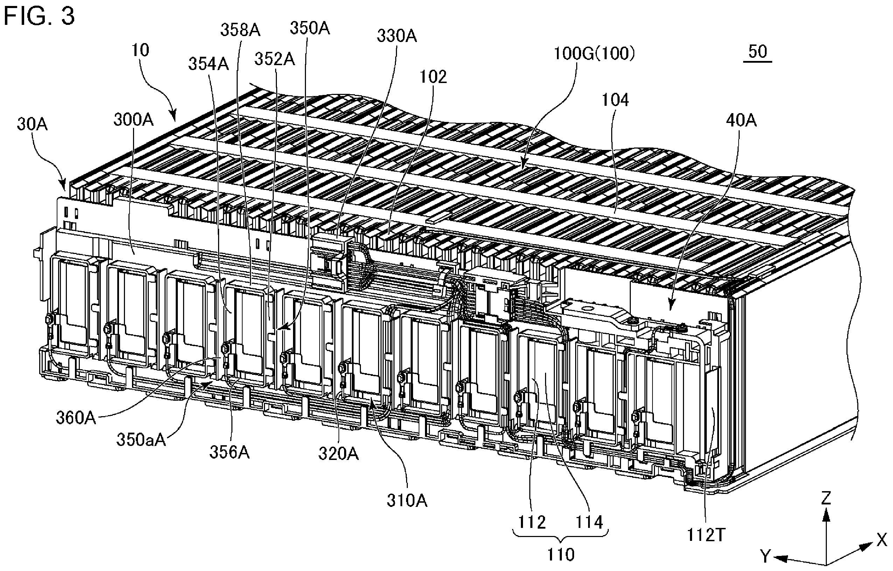

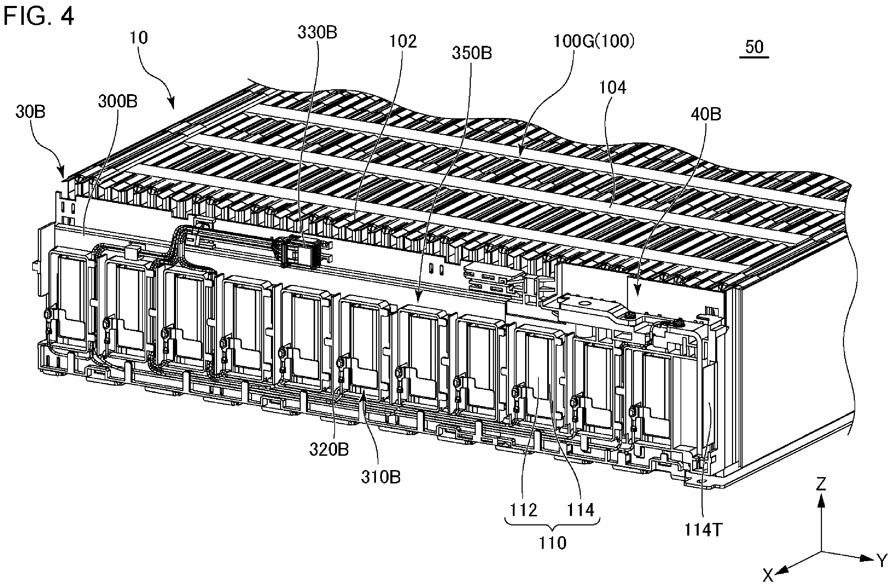

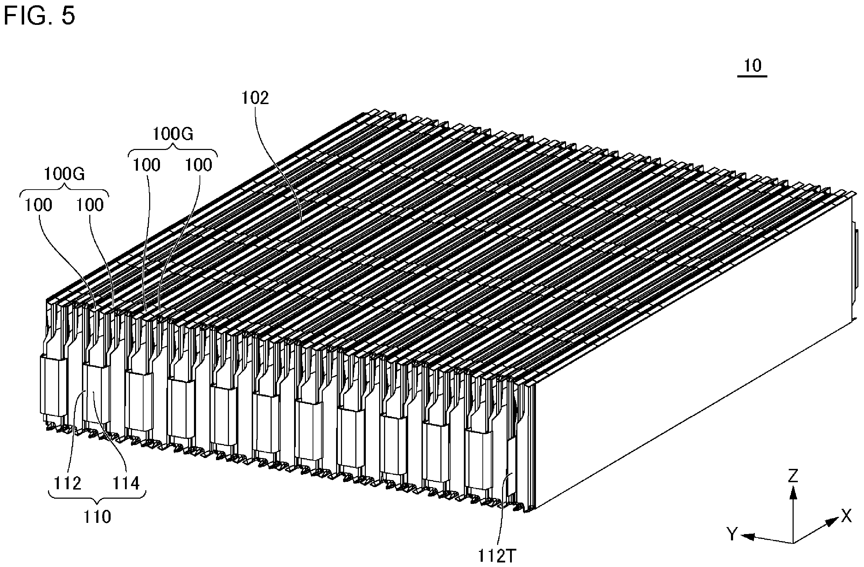

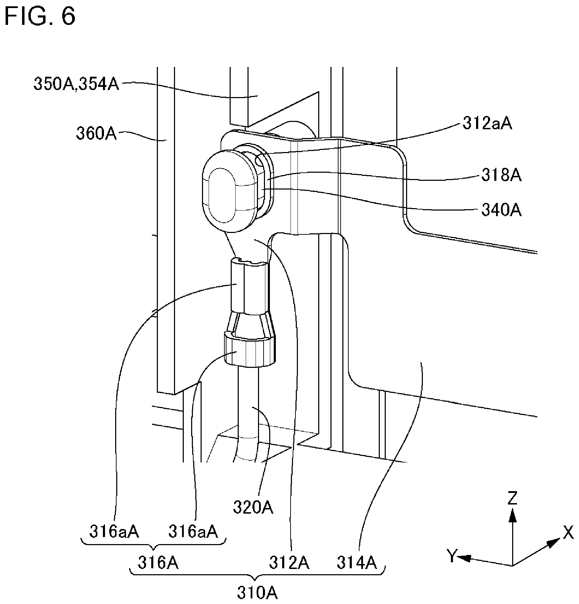

Fig. 1 is a perspective view of a battery module 50 according to an embodiment when viewed from the front. Fig. 2 is a perspective view of the battery module 50 according to the embodiment when viewed from the rear. Fig. 3 is a diagram with a housing body 20 removed from Fig. 1. Fig. 4 is a diagram with the housing body 20 removed from Fig. 2. Fig. 5 is a perspective view of a cell stack body 10 according to the embodiment when viewed from the front. Fig. 6 is an enlarged perspective view of a part of the battery module 50 according to the embodiment when viewed from the front.

In Figs. 1 to 5, an arrow indicating a first direction X, a second direction Y, and a third direction Z indicates that a direction from a base end to a tip end of the arrow is a positive direction of the direction indicated by the arrow and a direction from a tip end to a base end of the arrow is a negative direction of the direction indicated by the arrow. The first direction X indicates one direction parallel to a horizontal direction vertical to a vertical direction. Specifically, the first direction X indicates a front-rear direction of the battery module 50. A positive direction of the first direction X is a direction from the front toward the rear of the battery module 50. A negative direction of the first direction X is a direction from the rear toward the front of the battery module 50. The second direction Y indicates a direction vertical to the vertical direction and the first direction X. The second direction Y indicates a left-right direction of the battery module 50. A positive direction of the second direction Y is a direction from the right toward the left of the battery module 50 when viewed from the front of the battery module 50. A negative direction of the second direction Y is a direction from the left toward the right of the cell stack body 10 when viewed from the front of the battery module 50. The third direction Z indicates a direction parallel to the vertical direction. A positive direction of the third direction Z is a direction from the bottom toward the top of the battery module 50. A negative direction of the third direction Z is a direction from the top toward the bottom of the battery module 50.

A relationship among the first direction X, the second direction Y, the third direction Z, the vertical direction, and the horizontal direction is not limited to the example described above. For example, the cell stack body 10 may be disposed such that the first direction X or the second direction Y is parallel to the vertical direction.

Hereinafter, unless otherwise specified, "right" and "left" respectively mean the right and the left when viewed from the front of the battery module 50.

In the present embodiment, the battery module 50 is mounted on a moving body such as an automobile. However, a use of the battery element 50 is not limited to this example.

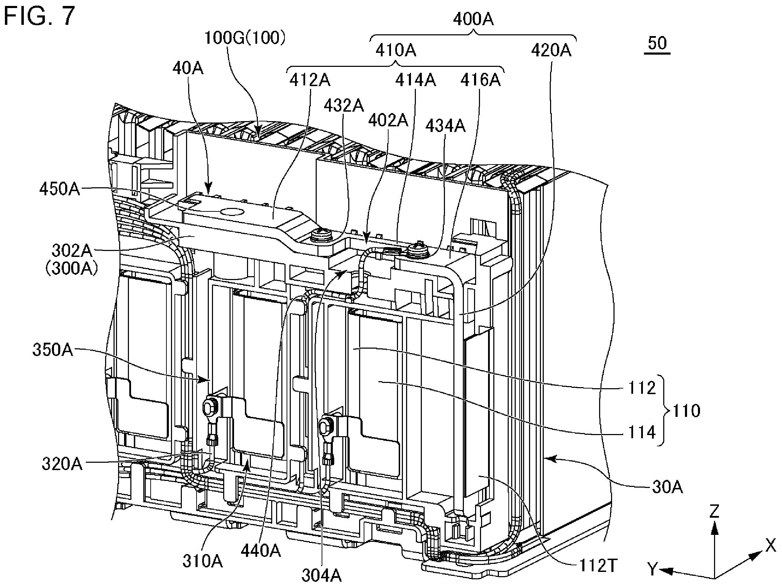

The battery module 50 includes the cell stack body 10, the housing body 20, a first voltage detection device 30A, and a second voltage detection device 30B. The first voltage detection device 30A includes a first fuse device 40A. The second voltage detection device 30B includes a second fuse device 40B. As described below by using Fig. 7, the first fuse device 40A includes a fuse electrically connected to a terminal positive lead 112T. The second fuse device 40B includes a fuse electrically connected to a terminal negative lead 114T.

As illustrated in Fig. 5, the cell stack body 10 includes a plurality of cell groups 100G stacked in the second direction Y. Each of the cell groups 100G includes a plurality of battery cells 100 stacked in the second direction Y. Each of the battery cells 100 includes an exterior material 102, a positive lead 112, and a negative lead 114.

In the present embodiment, each of the cell groups 100G includes two battery cells 100. However, each of the cell groups 100G may include three or more battery cells 100. In the cell stack body 10, the plurality of cell groups 100G may not be connected in series and the plurality of battery cells 100 may be connected in series. In other words, the number of the battery cells 100 included in the cell group 100G may be only one.

Each of the battery cells 100 is placed substantially in the vertical direction. The battery cell 100 placed substantially in the vertical direction does not only mean that the battery cell 100 is strictly placed in the vertical direction. The battery cell 100 placed substantially in the vertical direction means that the battery cell 100 may be inclined obliquely from the third direction Z in a range without a hindrance to operation of the battery module 50.

As illustrated in Figs. 3 and 4, a plurality of adhesive members 104 are disposed on an upper surface of the cell stack body 10. Each of the adhesive members 104 is, for example, a curing body of a liquid resin. In the present embodiment, the plurality of adhesive members 104 are regularly disposed. Specifically, the plurality of adhesive members 104 extend in parallel with the second direction Y and are arranged in parallel with the first direction X. An unillustrated insulating sheet is disposed above the plurality of adhesive members 104. A sixth cover member 260 described below is disposed above the unillustrated insulating sheet. A layout of the adhesive members 104 is not limited to the layout according to the present embodiment. For example, the adhesive member 104 may be entirely provided across the upper surface of the cell stack body 10. Alternatively, the plurality of adhesive members 104 may be irregularly disposed or may be arranged by a rule different from the rule illustrated in Figs. 3 and 4. Similarly to the upper surface of the cell stack body 10, an adhesive member is also disposed on a lower surface of the cell stack body 10.

The exterior material 102 houses a positive electrode, a negative electrode, and a separator that are not illustrated together with an electrolytic solution that is not illustrated. As one example, the positive electrode, the negative electrode, and the separator are stacked in the second direction Y inside the exterior material 102. Alternatively, the positive electrode, the negative electrode, and the separator may be wound inside the exterior material 102.

The positive lead 112 is drawn substantially in the horizontal direction from one of a front end and a rear end of the exterior material 102. The positive lead 112 is electrically connected to the positive electrode inside the exterior material 102. As one example, the positive lead 112 is formed of a metal such as aluminum. The positive lead 112 drawn substantially in the horizontal direction does not only mean that the positive lead 112 is strictly drawn in the horizontal direction. The positive lead 112 drawn substantially in the horizontal direction means that the positive lead 112 may be drawn in a direction shifted from the horizontal direction in a range without a hindrance to operation of the battery module 50.

The negative lead 114 is drawn substantially in the horizontal direction from another of the front end and the rear end of the exterior material 102. The negative lead 114 is electrically connected to the negative electrode inside the exterior material 102. As one example, the negative lead 114 is formed of a metal different from the metal forming the positive lead 112, such as copper. The negative lead 114 drawn substantially in the horizontal direction does not only mean that the negative lead 114 is strictly drawn in the horizontal direction. The negative lead 114 drawn substantially in the horizontal direction means that the negative lead 114 may be drawn in a direction shifted from the horizontal direction in a range without a hindrance to operation of the battery module 50.

When the plurality of battery cells 100 are included in each of the cell groups 100G, the plurality of battery cells 100 are connected in parallel. Specifically, the plurality of battery cells 100 included in each of the cell groups 100G are stacked in the second direction Y. The positive leads 112 of the plurality of battery cells 100 included in each of the cell groups 100G are bundled in the second direction Y and are connected to each other. The negative leads 114 of the plurality of battery cells 100 included in each of the cell groups 100G are bundled in the second direction Y and are connected to each other. The adjacent battery cells 100 may be stacked via an adhesive member. Examples of the adhesive member include a double-sided tape, a component that cures a liquid resin, and the like.

The plurality of cell groups 100G are connected in series via a lead portion 110. The lead portion 110 includes the plurality of positive leads 112 of the cell group 100G of one of the cell groups 100G adjacent to each other in the second direction Y and the plurality of negative leads 114 of the cell group 100G of another of the cell groups 100G adjacent to each other in the second direction Y. The plurality of positive leads 112 and negative leads 114 included in the lead portion 110 are bonded to each other by a bonding method such as laser welding, ultrasonic bonding, resistance welding, and adhesion. When a material of the positive lead 112 and a material of the negative lead 114 are different, laser welding is preferable among the bonding methods from a viewpoint of a high degree of reliability of bonding and a reduction in the number of parts. The lead portion 110 is folded back between the cell groups 100G adjacent to each other in the second direction Y. Thus, the plurality of lead portions 110 are arranged in the second direction Y in front of the cell stack body 10. The plurality of lead portions 110 are arranged in the second direction Y in rear of the cell stack body 10.

In the present embodiment, as illustrated in Fig. 3, the plurality of negative leads 114 are located closer to the front than the plurality of positive leads 112 in a bonding portion of the plurality of positive leads 112 and the plurality of negative leads 114 of each of the lead portions 110 located in front of the cell stack body 10. As illustrated in Fig. 4, the plurality of positive leads 112 are located closer to the rear than the plurality of negative leads 114 in a bonding portion of the plurality of positive leads 112 and the plurality of negative leads 114 of each of the lead portions 110 located in rear of the cell stack body 10. When the plurality of positive leads 112 are located closer to the front than the plurality of negative leads 114 in front of the cell stack body 10, a material of a first tip portion 314A described below is preferably the same as a material of the positive lead 112.

In the present embodiment, as illustrated in Fig. 3, the plurality of positive leads 112 included in the cell group 100G at one end of the plurality of cell groups 100G connected in series are located on a right front side of the cell stack body 10. Hereinafter, as necessary, the plurality of positive leads 112 included in the cell group 100G at the one end of the plurality of cell groups 100G connected in series are referred to as the terminal positive leads 112T. As illustrated in Fig. 4, the plurality of negative leads 114 included in the cell group 100G at another end of the plurality of cell groups 100G connected in series are located on a left rear side of the cell stack body 10. Hereinafter, as necessary, the plurality of negative leads 114 included in the cell group 100G at the another end of the plurality of cell groups 100G connected in series are referred to as the terminal negative leads 114T.

A structure of the cell stack body 10 is not limited to the structure according to the present embodiment. For example, the terminal negative lead 114T may be located on a left front side instead of the left rear side of the cell stack body 10. In this example, both of the terminal positive lead 112T and the terminal negative lead 114T are located on a front side. Whether the terminal negative lead 114T is located on the left front side or the left rear side of the cell stack body 10 can be adjusted by the number of the cell groups 100G stacked in the second direction Y.

In the present embodiment, as illustrated in Fig. 3, a front surface of the bonding portion of the positive lead 112 and the negative lead 114 of each of the lead portions 110 located in front of the cell stack body 10 is substantially parallel to a direction vertical to the first direction X. The front surface of the bonding portion substantially parallel to the direction vertical to the first direction X does not only mean that the front surface of the bonding portion is strictly parallel to the direction vertical to the first direction X. The front surface of the bonding portion substantially parallel to the direction vertical to the first direction X also means that the front surface of the bonding portion is slightly deformed from being parallel to the direction vertical to the first direction X in a range without a hindrance to a function of the lead portion 110. In the present embodiment, a first voltage detection portion 310A described below can be easily bonded to the front surface of the lead portion 110 as compared to a case where the front surface of the bonding portion is curved. In another example different from the present embodiment, the front surface of the bonding portion described above may be curved.

In the present embodiment, as illustrated in Fig. 4, similarly to the front surface of the bonding portion of the positive lead 112 and the negative lead 114 of each of the lead portions 110 located in front of the cell stack body 10, a rear surface of the bonding portion of the positive lead 112 and the negative lead 114 of each of the lead portions 110 located in rear of the cell stack body 10 is substantially parallel to the direction vertical to the first direction X.

The housing body 20 houses the cell stack body 10, the first voltage detection device 30A, and the second voltage detection device 30B. The housing body 20 includes a first cover member 210, a second cover member 220, a third cover member 230, a fourth cover member 240, a fifth cover member 250, and the sixth cover member 260. In the present embodiment, the first cover member 210, the second cover member 220, the third cover member 230, the fourth cover member 240, the fifth cover member 250, and the sixth cover member 260 are formed of, for example, a metal containing aluminum as a main component. However, a material forming the first cover member 210, the second cover member 220, the third cover member 230, the fourth cover member 240, the fifth cover member 250, and the sixth cover member 260 is not limited to this example.

The first cover member 210 covers the front side of the cell stack body 10 and the first voltage detection device 30A. The second cover member 220 covers a rear side of the cell stack body 10 and the second voltage detection device 30B. The third cover member 230 covers a right side of the cell stack body 10. The fourth cover member 240 covers a left side of the cell stack body 10. The fifth cover member 250 covers a lower side of the cell stack body 10. The sixth cover member 260 covers an upper side of the cell stack body 10.

As illustrated in Figs. 1 and 2, a right front side of an upper surface of the sixth cover member 260 is provided with a mark "+". A left rear side of the upper surface of the sixth cover member 260 is provided with a mark "-". The mark "+" indicates that the terminal positive lead 112T illustrated in Fig. 3 is located at a position provided with the mark "+". The mark "-" indicates that the terminal negative lead 114T illustrated in Fig. 4 is located at a position provided with the mark "-". Accordingly, a user of the battery module 50 can determine a position of the terminal positive lead 112T and a position of the terminal negative lead 114T from the mark "+" and the mark "-" even when the cell stack body 10 can be hardly seen from the outside of the housing body 20.

The first voltage detection device 30A includes a first holding body 300A, a plurality of the first voltage detection portions 310A, a plurality of first voltage detection lines 320A, and a first connector 330A.

The first holding body 300A is provided in front of the cell stack body 10. The first holding body 300A is an insulator. Examples of the insulator used include polypropylene, polybutylene terephthalate, modified polyphenylene ether, and a resin with hardness and insulating properties equivalent to or superior to those of these insulator. The first holding body 300A is attached to the holding body 20 by mechanical bonding such as snap fitting and a screw.

Each of the first voltage detection portions 310A includes a first base end portion 312A, the first tip portion 314A, and a first connection portion 316A.

The first base end portion 312A is supported to be movable in the first direction X along a first shaft member 340A provided on the first holding body 300A. Thus, each of the first voltage detection portions 310A is held by the first holding body 300A. The first shaft member 340A extends through a through hole provided in the first base end portion 312A in the first direction X. A diameter of a front end portion of the first shaft member 340A in the direction vertical to the first direction X is larger than a diameter of the through hole of the first base end portion 312A in the direction vertical to the first direction X. Accordingly, the first base end portion 312A is suppressed from being removed from the first shaft member 340A toward the front of the first shaft member 340A.

In the present embodiment, when viewed from the front of the cell stack body 10, the first tip portion 314A is displaced from the first base end portion 312A in the horizontal direction and the vertical direction. Specifically, when viewed from the front of the cell stack body 10, the first tip portion 314A is located on a right lower side of the first base end portion 312A. Thus, a gap exposing a part of the front surface of the lead portion 110 toward the front is provided on a right side of the first base end portion 312A and an upper side of the first tip portion 314A. Accordingly, at least a part of a bonding portion such as a laser welding portion between the positive lead 112 and the negative lead 114 can be provided in a region of the lead portion 110 overlapping the gap in the first direction X. In other words, the bonding portion of the lead portion 110 needs not to overlap the first tip portion 314A in the first direction X. In the present embodiment, therefore, a length in the vertical direction of the above-described bonding portion of the lead portion 110 can be longer as compared to a case for example where the first tip portion 314A is not displaced downward from the first base end portion 312A and is located on the right side of the first base end portion 312A. In the present embodiment, therefore, excellent connection between the positive lead 112 and the negative lead 114 in the lead portion 110 can be achieved as compared to the case described above.

In the present embodiment, the first tip portion 314A is displaced from the first base end portion 312A to a side on which the lead portion 110 is located. In the present embodiment, therefore, the first tip portion 314A can be easily close to the lead portion 110 and the first tip portion 314A can be easily connected to the lead portion 110 as compared to a case where a position in the first direction X of the first base end portion 312A and a position in the first direction X of the first tip portion 314A are aligned in the first direction X. In the present embodiment, a range of motion in the first direction X of the first base end portion 312A can be increased as compared to the case described above.

The first connection portion 316A protrudes downward from the first base end portion 312A. One end of the first voltage detection line 320A is connected to the first connection portion 316A. The first connection portion 316A may be integral with the first base end portion 312A, for example. As illustrated in Fig. 6, in the present embodiment, the first connection portion 316A includes two first barrels 316aA that crimp one end of the first voltage detection line 320A. The two first barrels 316aA are arranged in the vertical direction. One end of the first voltage detection line 320A enters an internal space of the two first barrels 316aA from below the two first barrels 316aA substantially in parallel with the vertical direction and is crimped by the two first barrels 316aA. Thus, one end of the first voltage detection line 320A is fixed to the first connection portion 316A. However, a method of fixing one end of the first voltage detection line 320A to the first connection portion 316A is not limited to the method according to the present embodiment. For example, the number of the first barrels 316aA provided on each of the first connection portions 316A may be only one. One end of the first voltage detection line 320A may be soldered to the first connection portion 316A.

A shape of the first voltage detection portion 310A is not limited to the shape according to the present embodiment as long as the first tip portion 314A does not overlap the bonding portion of the positive lead 112 and the negative lead 114 of the lead portion 110 in the first direction X. For example, when viewed from the front of the cell stack body 10, the gap described above may not be provided on the right side of the first base end portion 312A and the upper side of the first tip portion 314A. A position in the first direction X of the first base end portion 312A and a position in the first direction X of the first tip portion 314A may be aligned in the first direction X.

Each of the plurality of first voltage detection portions 310A is connected to each of the plurality of lead portions 110 in front of the cell stack body 10. Specifically, each of the first tip portions 314A is bonded to each of the lead portions 110 in front of the cell stack body 10 by a bonding method such as laser welding. In the present embodiment, a rear surface of the first tip portion 314A is bonded to the front surface of the bonding portion of the positive lead 112 and the negative lead 114 of the lead portion 110. The first tip portion 314A is preferably formed of the same material as that of a portion of the lead portion 110 in contact with the first tip portion 314A. In the present embodiment, the first tip portion 314A is in contact with the negative lead 114. In this example, the first tip portion 314A can be easily bonded to the negative lead 114 as compared to a case where the first tip portion 314A is formed of a material different from that of the negative lead 114. In another example, the first tip portion 314A may be formed of a material different from that of a portion of the lead portion 110 in contact with the first tip portion 314A.

Each of the plurality of first voltage detection lines 320A electrically connects each of the plurality of first voltage detection portions 310A to the first connector 330A. As described above, one end of each of the first voltage detection lines 320A is connected to the first connection portion 316A. Another end of each of the first voltage detection lines 320A is connected to the first connector 330A. In the present embodiment, a part of each of the first voltage detection lines 320A is drawn from the first connection portion 316A to a space below a first frame 350A described below through a notch 350aA provided in the first frame 350A. The notch 350aA is provided in a corner of the first frame 350A between a second edge portion 354A and a third edge portion 356A that are described below. Another part of each of the first voltage detection lines 320A passes through a space between the adjacent first frames 350A in a region displaced to the right side from the center of the first holding body 300A and is drawn from the space below the plurality of first frames 350A to the first connector 330A located above the plurality of first frames 350A. A layout of the first voltage detection portion 310A, the first voltage detection line 320A, the notch 350aA, and the first connector 330A such as a position of the first voltage detection portion 310A, routing of the first voltage detection line 320A, a position of the notch 350aA, and a position of the first connector 330A is not limited to the example according to the present embodiment. For example, the notch 350aA may be provided on a first edge portion 352A side and the first tip portion 314A of the first voltage detection portion 310A may be drawn to the positive direction side of the second direction Y with respect to the first edge portion 352A. The first connection portion 316A of the first voltage detection portion 310A may be extracted toward the positive direction side of the third direction Z and the first voltage detection line 320A may be drawn from the space above the first frame 350A and connected to the first connector 330A.

In the present embodiment, at least a part of a region of the first voltage detection line 320A located between the first connection portion 316A and the notch 350aA has flexibility. When the first base end portion 312A is moved in the first direction X along the first shaft member 340A, the first voltage detection line 320A may contact the first holding body 300A or the first frame 350A near the notch 350aA. Even in such a case, the above-described at least a part of the first voltage detection line 320A flexes to allow the first base end portion 312A to be moved in the first direction X along the first shaft member 340A.

The first holding body 300A includes the plurality of first frames 350A. The first frame 350A is an insulator. Examples of the insulator used include polypropylene, polybutylene terephthalate, modified polyphenylene ether, and a resin with hardness and insulating properties equivalent to or superior to those of these insulators. Each of the plurality of first frames 350A surrounds each of the plurality of lead portions 110 and each of the plurality of first voltage detection portions 310A. Accordingly, the first frame 350A can protect the lead portion 110 and the first voltage detection portion 310A from an external impact. Each of the first frames 350A may not be located in the entire region surrounding each of the lead portions 110 and each of the first voltage detection portions 310A. Each of the first frames 350A may be located in at least a part of the region surrounding each of the lead portions 110 and each of the first voltage detection portions 310A. The first holding body 300A may be formed of a single member or may be formed of a plurality of combined members.

Each of the first frames 350A includes the first edge portion 352A, the second edge portion 354A, the third edge portion 356A, and a fourth edge portion 358A. The first edge portion 352A extends in the vertical direction on the right side of the lead portion 110 and the first voltage detection portion 310A surrounded by each of the first frames 350A. The second edge portion 354A extends in the vertical direction on the left side of the lead portion 110 and the first voltage detection portion 310A surrounded by each of the first frames 350A. The third edge portion 356A extends in the left-right direction on the lower side of the lead portion 110 and the first voltage detection portion 310A surrounded by each of the first frames 350A. The fourth edge portion 358A extends in the left-right direction on the upper side of the lead portion 110 and the first voltage detection portion 310A surrounded by each of the first frames 350A.

A shape of the first frame 350A is not limited to the shape according to the present embodiment. For example, the first frame 350A may not include one of the first edge portion 352A and the second edge portion 354A. The first frame 350A, the first frame 350A may not include at least one of the third edge portion 356A and the fourth edge portion 358A.

In the present embodiment, at least a part of the insulator forming each of the first frames 350A is located between the first voltage detection portion 310A surrounded by each of the first frames 350A and the lead portion 110 different from the lead portion 110 connected to the first voltage detection portion 310A. The present embodiment, therefore, can secure electrical insulation between the first voltage detection portion 310A surrounded by each of the first frames 350A and the lead portion 110 different from the lead portion 110 connected to the first voltage detection portion 310A.

Specifically, at least a part of the insulator forming the first edge portion 352A except for the first frame 350A located closest to a right end is located between the first voltage detection portion 310A located on a left side of the first edge portion 352A and the lead portion 110 located on a right side of the first edge portion 352A. Accordingly, electrical insulation between the first voltage detection portion 310A located on the left side of the first edge portion 352A and the lead portion 110 located on the right side of the first edge portion 352A can be secured as compared to a case where the first edge portion 352A is not provided.

At least a part of the insulator forming the second edge portion 354A except for the first frame 350A located closest to a left end is located between the first voltage detection portion 310A located on a right side of the second edge portion 354A and the lead portion 110 located on a left side of the second edge portion 354A. Accordingly, electrical insulation between the first voltage detection portion 310A located on the right side of the second edge portion 354A and the lead portion 110 located on the left side of the second edge portion 354A can be secured as compared to a case where the second edge portion 354A is not provided.

In the present embodiment, at least a part of the insulator forming each of the first frames 350A is located between different lead portions 110. Specifically, at least a part of the insulator forming each of the first frames 350A is located between the adjacent lead portions 110. Accordingly, electrical insulation between the different lead portions 110 can be secured as compared to a case where at least a part of the insulator forming each of the first frames 350A is not located between different lead portions 110.

Specifically, at least a part of the insulator forming the first edge portion 352A except for the first frame 350A located closest to the right end is located between the lead portion 110 located on the left side of the first edge portion 352A and the lead portion 110 located on the right side of the first edge portion 352A. Accordingly, electrical insulation between the lead portion 110 located on the left side of the first edge portion 352A and the lead portion 110 located on the right side of the first edge portion 352A can be secured as compared to a case where the first edge portion 352A is not provided.

At least a part of the insulator forming the second edge portion 354A except for the first frame 350A located closest to the left end is located between the lead portion 110 located on the right side of the second edge portion 354A and the lead portion 110 located on the left side of the second edge portion 354A. Accordingly, electrical insulation between the lead portion 110 located on the right side of the second edge portion 354A and the lead portion 110 located on the left side of the second edge portion 354A can be secured as compared to a case where the second edge portion 354A is not provided.

An insulating protruding portion that protrudes toward the positive direction side of the first direction X may be provided on a surface of the first frame 350A on the positive direction side of the first direction X. At least a part of the protruding portion is located between the lead portions 110 adjacent to each other in the second direction Y. For example, the protruding portion is provided on the positive direction side of the first direction X of the first edge portion 352A of the first frame 350A on the left side of the first frames 350A adjacent to each other in the second direction Y and on the positive direction side of the first direction X of the second edge portion 354A of the first frame 350A on the right side of the first frames 350A adjacent to each other in the second direction Y. In this example, when the lead portions 110 adjacent to each other in the second direction Y are shifted in the second direction Y due to a factor such as an external impact, the lead portion 110 contacts the protruding portion. This can suppress a collision between the lead portions 110 adjacent to each other in the second direction Y. A length of the protruding portion is not particularly limited, but, for example, the length can be a length for suppressing a collision between the lead portions 110 adjacent to each other in the second direction Y. A position in which the protruding portion is provided is not limited to the example described above.

In the present embodiment, at least a part of the insulator forming each of the first frames 350A is located between at least one lead portion 110 and at least a part of the housing body 20 having conductivity. The present embodiment, therefore, can secure electrical insulation between at least one lead portion 110 and at least a part of the housing body 20 having conductivity.

Specifically, at least a part of the third edge portion 356A is located below the lead portion 110 surrounded by each of the first frames 350A. In the present embodiment, a front end portion of the fifth cover member 250 is located below a lower end portion of the lead portion 110. When the fifth cover member 250 has conductivity, there is a risk that the lead portion 110 and the fifth cover member 250 may be short-circuited if the lower end portion of the lead portion 110 contacts the front end portion of the fifth cover member 250. In the present embodiment, on the other hand, at least a part of the insulator forming the third edge portion 356A is located between the lower end portion of the lead portion 110 and the front end portion of the fifth cover member 250. Thus, a short circuit between the lead portion 110 and the fifth cover member 250 can be suppressed as compared to a case where the third edge portion 356A is not provided.

The example described above explains that the third edge portion 356A secures electrical insulation between the lower end portion of the lead portion 110 and the front end portion of the fifth cover member 250. However, securing of electrical insulation between the lead portion 110 and the housing body 20 by the first frame 350A is not limited to the example described above. For example, the fourth edge portion 358A can secure electrical insulation between an upper end portion of the lead portion 110 and a front end portion of the sixth cover member 260. Electrical insulation between a right end portion of the lead portion 110 located closest to the right end among the plurality of lead portions 110 and a front end portion of the third cover member 230 can be secured by the first edge portion 352A of the first frame 350A located closest to the right end among the plurality of first frames 350A. Furthermore, electrical insulation between a left end portion of the lead portion 110 located closest to the left end among the plurality of lead portions 110 and a front end portion of the fourth cover member 240 can be secured by the second edge portion 354A of the first frame 350A located closest to the left end among the plurality of first frames 350A.

In the present embodiment, the second edge portion 354A of the first frame 350A surrounding the lead portion 110 on the right side of the lead portions 110 adjacent to each other in the second direction Y and the first edge portion 352A of the first frame 350A surrounding the lead portion 110 on the left side of the lead portions 110 adjacent to each other in the second direction Y are located between the lead portions 110 adjacent to each other in the second direction Y. Accordingly, a distance in the second direction Y between the lead portions 110 adjacent to each other in the second direction Y needs to be greater than a distance in the second direction Y between the above-described second edge portion 354A and the above-described first edge portion 352A located between the lead portions 110 adjacent to each other in the second direction Y. A distance in the second direction Y between the lead portions 110 adjacent to each other in the second direction Y increases as the number of the battery cells 100 included in the cell group 100G increases. Accordingly, a distance in the second direction Y between the lead portions 110 adjacent to each other in the second direction Y can be more easily increased when the number of the battery cells 100 included in the cell group 100G is plural than when the number of the battery cells 100 included in the cell group 100G is only one.

As illustrated in Fig. 3, the first holding body 300A may include a plurality of first partitions 360A. However, the first holding body 300A may not include the first partition 360A. The first partition 360A is an insulator. Examples of the insulator used include polypropylene, polybutylene terephthalate, modified polyphenylene ether, and a resin with hardness and insulating properties equivalent to or superior to those of these insulators. Each of the plurality of first partitions 360A is located between the first frames 350A adjacent to each other in the second direction Y. Accordingly, contact between a wiring such as the first voltage detection line 320A connected to the first connector 330A, and the first voltage detection portion 310A can be suppressed when the first partition 360A is provided as compared to a case where the first partition 360A is not provided.

The first voltage detection portion 310A will be further described with reference to Fig. 6.

The first base end portion 312A includes a first ridge 318A. The first ridge 318A is formed of the same material as that of the first base end portion 312A, for example. The first ridge 318A is integral with the first base end portion 312A. However, the first ridge 318A may be formed of a material different from that of the first base end portion 312A. When viewed from the first direction X, the first ridge 318A is located at least partially around a first through hole 312aA of the first base end portion 312A through which the first shaft member 340A extends. In the embodiment, therefore, swinging of the first voltage detection portion 310A with a fulcrum located at the first shaft member 340A can be suppressed as compared to a case where the first ridge 318A is not provided. Thus, in the embodiment, wobbling of the first voltage detection portion 310A can be suppressed as compared to a case where the first ridge 318A is not provided.

Specifically, in the embodiment, when viewed from the first direction X, the first ridge 318A is provided on an entire periphery of the first through hole 312aA on a surface of the first base end portion 312A on the negative direction side of the first direction X. Thus, the first ridge 318A is provided on both sides of the third direction Z of the first through hole 312aA of the first base end portion 312A. In this case, swinging of the first voltage detection portion 310A around a rotating axis passing in parallel with the second direction Y through a passage portion of the first shaft member 340A through the first through hole 312aA can be suppressed as compared to a case where the first ridge 318A is not provided on both sides of the third direction Z of the first through hole 312aA of the first base end portion 312A. The first ridge 318A is provided on both sides of the second direction Y of the first through hole 312aA of the first base end portion 312A. In this case, swinging of the first voltage detection portion 310A around a rotating axis passing in parallel with the third direction Z through a passage portion of the first shaft member 340A through the first through hole 312aA can be suppressed as compared to a case where the first ridge 318A is not provided on both sides of the second direction Y of the first through hole 312aA of the first base end portion 312A.

A position in which the first ridge 318A is provided is not limited to the example described in the embodiment. For example, the first ridge 318A may be provided on a surface of the first base end portion 312A on the positive direction side of the first direction X. When viewed from the first direction X, the first ridge 318A may be provided only on a part of the entire periphery of the first through hole 312aA of the first base end portion 312A. For example, the first ridge 318A may be provided on at least one of both sides of the third direction Z of the first through hole 312aA of the first base end portion 312A. The first ridge 318A may be provided on at least one of both sides of the second direction Y of the first through hole 312aA of the first base end portion 312A.

The first through hole 312aA has a longitudinal direction in the third direction Z when viewed from the first direction X. In other words, the first through hole 312aA has the longitudinal direction in a direction crossing the first direction X being an extending direction of the first shaft member 340A. In this case, swinging of the first voltage detection portion 310A around the first shaft member 340A can be suppressed as compared to a case where the first through hole 312aA is circular when viewed from the first direction X. However, the first through hole 312aA may be circular when viewed from the first direction X.

A part of the first frame 350A, i.e., the second edge portion 354A is located on the positive direction side of the third direction Z of the first base end portion 312A. When viewed from the first direction X, a portion of the second edge portion 354A opposite to the first base end portion 312A has a structure opposite to at least a part of the first voltage detection portion 310A in a circumferential direction about the first shaft member 340A. Specifically, when the first voltage detection portion 310A is rotated counterclockwise around the first shaft member 340A as viewed from the negative direction of the first direction X, at least a part of the first voltage detection portion 310A contacts the end portion of the second edge portion 354A. In the embodiment, therefore, swinging of the first voltage detection portion 310A around the rotating axis passing in parallel with the first direction X through the first shaft member 340A can be suppressed as compared to a case where the end portion of the second edge portion 354A is not provided.

The first partition 360A is located on the positive direction side of the second direction Y of the first base end portion 312A and the first connection portion 316A. A portion of the first partition 360A opposite to the first base end portion 312A and the first connection portion 316A has a structure opposite to at least a part of the first voltage detection portion 310A in the circumferential direction about the first shaft member 340A. Specifically, when the first voltage detection portion 310A is rotated clockwise around the first shaft member 340A as viewed from the negative direction of the first direction X, at least a part of the first voltage detection portion 310A contacts the portion of the first partition 360A. Accordingly, swinging of the first voltage detection portion 310A around the rotating axis passing in parallel with the first direction X through the first shaft member 340A can be suppressed. When the first partition 360A is not provided, the first voltage detection portion 310A may be disposed such that at least a part of the first voltage detection portion 310A contacts the first edge portion 352A of the first frame 350A located on the left side of the first frame 350A on which the first voltage detection portion 310A is disposed if the first voltage detection portion 310A is rotated clockwise around the first shaft member 340A as viewed from the negative direction of the first direction X.

An end portion of the first base end portion 312A on the positive direction side of the second direction Y may be bent toward the positive direction side of the first direction X or the negative direction side of the first direction X. In this case, even when the first voltage detection portion 310A swings around the rotating axis passing in parallel with the third direction Z through the passage portion of the first shaft member 340A through the first through hole 312aA, the bent end portion of the first base end portion 312A on the positive direction side of the second direction Y can be brought into contact with a surrounding structure such as the first partition 360A. Thus, swinging of the first voltage detection portion 310A around the rotating axis passing in parallel with the third direction Z through the passage portion of the first shaft member 340A through the first through hole 312aA can be suppressed as compared to a case where the end portion of the first base end portion 312A on the positive direction side of the second direction Y is not bent. Instead of bending of the end portion of the first base end portion 312A on the positive direction side of the second direction Y, a protrusion protruding from or from the vicinity of the end portion of the first base end portion 312A on the positive direction side of the second direction Y toward the positive direction side of the first direction X or the negative direction side of the first direction X may be provided. When the protrusion is provided, the protrusion can be brought into contact with a surrounding structure such as the first partition 360A even if the first voltage detection portion 310A swings around the rotating axis passing in parallel with the third direction Z through the passage portion of the first shaft member 340A through the first through hole 312aA. Thus, swinging of the first voltage detection portion 310A around the rotating axis passing in parallel with the third direction Z through the passage portion of the first shaft member 340A through the first through hole 312aA can be suppressed as compared to a case where the protrusion is not provided.

Similarly to the first voltage detection device 30A, the second voltage detection device 30B includes a second holding body 300B, a plurality of second voltage detection portions 310B, a plurality of second voltage detection lines 320B, and a second connector 330B.

The second holding body 300B is provided in rear of the cell stack body 10. Each of the plurality of second voltage detection portions 310B is connected to each of the plurality of lead portions 110 in rear of the cell stack body 10. In the present embodiment, a surface of each of the second voltage detection portions 310B on the negative direction side of the first direction X is bonded to the surface on the positive direction side of the first direction X of the bonding portion of the positive lead 112 and the negative lead 114 of the lead portion 110. Each of the plurality of second voltage detection lines 320B electrically connects each of the plurality of second voltage detection portions 310B to the second connector 330A. The second holding body 300A includes a plurality of second frames 350B. Similarly to the plurality of first frames 350A, each of the plurality of second frames 350B surrounds each of the plurality of cell stack bodies 10 provided in rear of the cell stack body 10 and each of the plurality of second voltage detection portions 310B.

Fig. 7 is an enlarged view of a position in the first voltage detection device 30A according to the embodiment in which the first fuse device 40A is provided.

The first fuse device 40A includes a first base 302A, a first conductor 400A, a first fixture 432A, a second fixture 434A, and a first wiring 440A.

The first base 302A includes a right end portion of the first holding body 300A. In the present embodiment, the first base 302A includes two first frames 350A closest to the right end among the plurality of first frames 350A.

The first conductor 400A is provided on the first base 302A. The first conductor 400A is formed of, for example, a metal. The first conductor 400A functions as a bus bar electrically connected to the terminal positive lead 112T.

The first conductor 400A includes a plurality of extension bodies extending in different directions. At least a part of at least one of the plurality of extension bodies is held by the first base 302A.

Specifically, the first conductor 400A includes a first extension body 410A extending in the horizontal direction and a second extension body 420A extending in the vertical direction. The second extension body 420A extends downward from a right end portion of the first extension body 410A. The first extension body 410A and the second extension body 420A are integrally formed. However, the first conductor 400A may be formed by, for example, coupling a metal to be the first extension body 410A and a metal to be the second extension body 420A. However, a formation method of the first conductor 400A is not limited to this example. A shape of the first conductor 400A is not limited to the shape according to the present embodiment. For example, the first conductor 400A may not include the second extension body 420A.

The first extension body 410A includes a first wide portion 412A, a narrow portion 414A, and a second wide portion 416A. A left end of the narrow portion 414A is connected to a right end of the first wide portion 412A. A right end of the narrow portion 414A is connected to a left end of the second wide portion 416A.

The first wide portion 412A functions as a terminal for being electrically connected to an unillustrated different battery module. A fastening hole 450A is provided in a left end portion of the first wide portion 412A. For example, an unillustrated fixture for fixing an unillustrated bus bar electrically connected to a different battery module is fixed to the fastening hole 450A. In the present embodiment, a surrounding portion of the fastening hole 450A of the first wide portion 412A is located higher than the narrow portion 414A. However, the surrounding portion of the fastening hole 450A of the first wide portion 412A may be located at the same height as the narrow portion 414A.

The narrow portion 414A functions as a fuse. A width in the first direction X of the narrow portion 414A is narrower than both of a width in the first direction X of the first wide portion 412A and a width in the first direction X of the second wide portion 416A. Thus, a cross-sectional area vertical to the second direction Y of the narrow portion 414A is smaller than both of a cross-sectional area vertical to the second direction Y of the first wide portion 412A and a cross-sectional area vertical to the second direction Y of the second wide portion 416A. Accordingly, when an overcurrent flows through the first conductor 400A, the narrow portion 414A is more easily fused than the first wide portion 412A and the second wide portion 416A.

In the present embodiment, the narrow portion 414A is attached to the first holding body 300A. Accordingly, the first voltage detection portion 310A and a fuse can be spatially efficiently provided as compared to a case where a structure for holding a fuse is provided separately from the first holding body 300A.

Furthermore, in the present embodiment, the battery module 50 can be reduced in size as compared to a case where a tubular fuse tube is used as a fuse. Specifically, when a tubular fuse is used, a size of the tubular fuse increases as energy of the battery module 50 increases. Accordingly, in the battery module 50 having relatively high energy, a space for providing the tubular fuse relatively increases. When a part of the first conductor 400A functions as a fuse, in contrast, a space for providing the fuse can be reduced as compared to a case where the tubular fuse is used.

In the present embodiment, the narrow portion 414A extends in the same direction as an extending direction of the first wide portion 412A. In other words, the first wide portion 412A and the narrow portion 414A extend in the second direction Y. If the narrow portion 414A is provided on the second extension body 420A and extends in a direction orthogonal to the extending direction of the first wide portion 412A, it may be difficult to bond the narrow portion 414A provided on the second extension body 420A to the terminal positive lead 112T. In the present embodiment, on the other hand, the narrow portion 414A does not need to be provided on the second extension body 420A. In the present embodiment, therefore, a length in the third direction Z of a bonding portion of the second extension body 420A and the terminal positive lead 112T can be increased as compared to the case described above. In the present embodiment, a length in the second direction Y of the narrow portion 414A can be easily adjusted as compared to the case described above. Furthermore, in the present embodiment, the narrow portion 414A and the terminal positive lead 112T can be provided farther away from each other as compared to the case described above. In the present embodiment, therefore, an influence of heat generation by the narrow portion 414A on the terminal positive lead 112T can be suppressed as compared to the case described above.

A first space 402A defining the narrow portion 414A is provided in front of the narrow portion 414A of the first extension body 410A. In the present embodiment, the first space 402A is formed by punching out a portion in front of the portion to be the narrow portion 414A of a conductor forming the first extension body 410A by press.

A space defining the narrow portion 414A is not provided in rear of the narrow portion 414A of the first extension body 410A. However, a method of forming the narrow portion 414A is not limited to the method according to the present embodiment. For example, the first space 402A may be provided in rear of the narrow portion 414A. Alternatively, the first space 402A may be provided in both of front and rear of the narrow portion 414A. The first space 402A may be formed by a through hole extending through the first extension body 410A in the vertical direction. In this case, a portion of the first extension body 410A on both sides of the first direction X of the first space 402A is the narrow portion 414A functioning as a fuse.

When the narrow portion 414A is formed by press, as in the present embodiment, the space defining the narrow portion 414A is preferably provided on only one of both sides of the first direction X of the first extension body 410A. In this case, a portion behind the portion to be the narrow portion 414A of the conductor forming the first extension body 410A does not need to be punched out by press. The present embodiment and a case where both of the portions in front of and behind the portion to be the narrow portion 414A of the conductor forming the first extension body 410A are punched out by press are compared. Since the portions in front of and behind the portion to be the narrow portion 414A need to be simultaneously or individually punched out in the case described above, a mechanical load on the narrow portion 414A being the narrowest in the first extension body 410A increases at a time of press as compared to the present embodiment. Thus, in the case described above, a width in the first direction X of the narrow portion 414A needs to be wider from a viewpoint of suppressing a break in the narrow portion 414A as compared to the present embodiment. In the present embodiment, on the other hand, a width in the first direction X of the narrow portion 414A can be narrower and a degree of freedom in dimensions of the narrow portion 414A can be increased as compared to the case described above.

A method of forming the narrow portion 414A is not limited to press working. The narrow portion 414A may be formed by, for example, laser processing. When the narrow portion 414A is formed by laser processing, the space defining the narrow portion 414A may be provided on only one of both sides of the first direction X of the first extension body 410A or may be provided on both sides of the first direction X of the first extension body 410A.

A second space 304A is provided below the narrow portion 414A. The second space 304A is defined by a recessed portion provided in an upper surface of the first base 302A on which the first extension body 410A is placed. In the present embodiment, when an overcurrent flows through the first conductor 400A and the narrow portion 414A is fused, the fused narrow portion 414A can fall into the second space 304A. Accordingly, according to the present embodiment, reliability of fuse cutting of the narrow portion 414A can be increased as compared to a case where a lower surface of the narrow portion 414A is in contact with the upper surface of the first base 302A.

In the present embodiment, at least a part of the narrow portion 414A is located above at least one of the positive lead 112 and the negative lead 114. At least a part of the first base 302A is located between at least one of the positive lead 112 and the negative lead 114 and at least a part of the narrow portion 414A in the third direction Z. Specifically, a portion of the first base 302A defining a bottom of the above-described recessed portion is located between at least one of the positive lead 112 and the negative lead 114 and at least a part of the narrow portion 414A in the third direction Z. Accordingly, the fused narrow portion 414A can be prevented from contacting the positive lead 112 or the negative lead 114 located below the narrow portion 414A.

A portion of the narrow portion 414A located above at least one of the positive lead 112 and the negative lead 114 may have a heat resistant property. For example, a heat resistant layer may be provided on a bottom surface of the above-described recessed portion of the first base 302A. The heat resistant layer may be a metal or may be an inorganic material such as a ceramic material and a vitreous material. By providing the heat resistant layer, the fused narrow portion 414A can be more reliably prevented from melting a main body portion of the first base 302A and contacting the positive lead 112, the negative lead 114, or the first wiring 440A.

The first wide portion 412A is fixed to the first base 302A by the first fixture 432A. In the present embodiment, the first fixture 432A is a screw that extends through the first wide portion 412A in the vertical direction and is inserted into a portion of the first base 302A located below the first wide portion 412A. A through hole through which a shaft portion of the first fixture 432A can be inserted in the vertical direction is provided in the first wide portion 412A. The first fixture 432A may be a fixture other than a screw, such as a vis, a bolt, and the like.

The second wide portion 416A is fixed to the first base 302A by the second fixture 434A. In the present embodiment, the second fixture 434A is a screw that extends through the second wide portion 416A in the vertical direction and is inserted into a portion of the first base 302A located below the second wide portion 416A. A through hole through which a shaft portion of the second fixture 434A can be inserted in the vertical direction is provided in the second wide portion 416A. The second fixture 434A may be a fixture other than a screw, such as a vis, a bolt, and the like.

In the present embodiment, a fixture such as the first fixture 432A and the second fixture 434A is attachable to and removable from the first conductor 400A. Accordingly, when the first conductor 400A needs to be exchanged as the narrow portion 414A is fused or the like, the first conductor 400A can be exchanged with a new first conductor 400A by removing the fixture such as the first fixture 432A and the second fixture 434A.

A method of fixing the first conductor 400A to the first base 302A is not limited to the example described above. For example, at least a part of the first conductor 400A may be bonded to at least a part of the first base 302A via mechanical bonding such as snap fitting.

In the present embodiment, both of the first wide portion 412A and the second wide portion 416A are fixed to the first base 302A by the first fixture 432A and the second fixture 434A. In this case, application of force to break the narrow portion 414A to the narrow portion 414A can be suppressed as compared to a case where at least one of the first wide portion 412A and the second wide portion 416A is not fixed to the first base 302A. The force to break the narrow portion 414A is generated on fixing an unillustrated fixture to the fastening hole 450A when, for example, an unillustrated bus bar for electrically connecting the battery module 50 to an unillustrated different battery module is attached to the first wide portion 412A. The reason is that the fastening hole 450A and the narrow portion 414A are located on substantially the same plane vertical to the third direction Z.

The first fixture 432A and the second fixture 434A are preferably disposed in a position close to the narrow portion 414A. For example, the first fixture 432A and the second fixture 434A are preferably provided on positions at opposite sides of the first space 402A.

In the present embodiment, at least a part of the first wiring 440A passes through the first space 402A. In this case, the first wiring 440A can be spatially efficiently routed as compared to a case where the first wiring 440A passes through a region different from the first space 402A.

In the present embodiment, at least a part of the first wiring 440A passes through a portion displaced in the horizontal direction from a portion of the first base 302A located below the narrow portion 414A. In the present embodiment, a through hole that passes the first wiring 440A is provided in the bottom surface of the recessed portion defining the second space 304A in the first base 302A. The through hole is located on the negative direction side of the first direction X from a region directly below the narrow portion 414A. Accordingly, the narrow portion 414A fused and falling into the second space 304A can be less likely to contact the first wiring 440A.

The first wiring 440A includes one end connected to the second wide portion 416A and another end connected to the first connector 330A illustrated in Fig. 3. A part of the first wiring 440A is drawn downward from the one end of the first wiring 440A connected to the second wide portion 416A and passes through the first space 402A and the second space 304A. Another part of the first wiring 440A passes through a portion of the first base 302A located below the second space 304A and a region between the two first frames 350A closest to the right end and is drawn into the space below the plurality of first frames 350A. Still another part of the first wiring 440A passes through the space between the adjacent first frames 350A in a region displaced to the right side from the center of the first holding body 300A and is drawn from the space below the plurality of first frames 350A to the first connector 330A located above the plurality of first frames 350A. The routing of the first wiring 440A is not limited to the example according to the present embodiment.

In the present embodiment, the one end of the first wiring 440A connected to the second wide portion 416A is fixed to the second wide portion 416A by the second fixture 434A. In the present embodiment, attachment and removal of the first wiring 440A when the narrow portion 414A is fused are facilitated as compared to a case where the above-described one end of the first wiring 440A is fixed to the second wide portion 416A by, for example, soldering. The above-described one end of the first wiring 440A may be provided with a connection part such as a crimp contact, for example. In this case, as the connection part is fixed by the second fixture 434A, the above-described one end of the first wiring 440A can be fixed to the second wide portion 416A. However, a method of connecting the above-described one end of the first wiring 440A to the second wide portion 416A is not limited to this example.

In the present embodiment, the second fixture 434A fixes both of the second wide portion 416A and the one end of the first wiring 440A connected to the second wide portion 416A to the first base 302A. In this case, the number of parts can be less than when a fixture for fixing the second wide portion 416A to the first base 302A and a fixture for fixing the above-described one end of the first wiring 440A to the first base 302A are separately provided. In another example different from the present embodiment, a fixture for fixing the second wide portion 416A to the first base 302A and a fixture for fixing the above-described one end of the first wiring 440A to the first base 302A may be separately provided.

A portion of the second wide portion 416A provided with the second fixture 434A functions as a voltage detection portion to detects a voltage of the terminal positive lead 112T. In other words, the terminal positive lead 112T is a voltage detection target of the portion of the second wide portion 416A provided with the second fixture 434A. The first wiring 440A functions as a voltage detection line electrically connected to the voltage detection portion. In the present embodiment, one end of the first wiring 440A fixed by the second fixture 434A is electrically connected to the second wide portion 416A. In this case, as an influence of a voltage drop in the narrow portion 414A can be suppressed and a voltage of the terminal positive lead 112T can be detected, the voltage of the terminal positive lead 112T can be more accurately detected as compared to a case where the first wiring 440A is electrically connected to the first wide portion 412A.

In Figs. 3 and 7, the second extension body 420A is electrically connected to the terminal positive lead 112T. In the present embodiment, a right surface of the second extension body 420A and a left surface of the terminal positive lead 112T are bonded to each other by a bonding method such as laser welding. The second extension body 420A may not be provided. When the second extension body 420A is not provided, the terminal positive lead 112T and the first extension body 410A can also be electrically connected to each other via an unillustrated L-shaped bus bar.

At least a part of the second extension body 420A is held by at least a part of the first base 302A. In the present embodiment, an upper end of the first extension body 410A is held by both side surfaces in the second direction Y of a through hole of the first base 302A through which the upper end of the first extension body 410A extends. A lower end of the second extension body 420A is held by both side surfaces in the second direction Y of a hole of the first base 302A into which the lower end of the second extension body 420A is inserted. The present embodiment is preferable because application of force to rotate the narrow portion 414A in a direction perpendicular to the vertical direction can be suppressed as compared to a case where the second extension body 420A is not held by the first base 302A. Accordingly, break in the narrow portion 414A can be further suppressed as compared to a case where the second extension body 420A is not held by the first base 302A.

While the embodiments of the present invention have been described with reference to the drawings, the embodiments are only exemplification of the present invention and various configurations other than the above-described embodiments can also be employed.

For example, the first fuse device 40A according to the embodiment is electrically connected to the battery cell 100. However, the first fuse device 40A may be electrically connected to an electronic apparatus different from the battery cell 100. The same applies to the second fuse device 40B.

This application claims priority based on Japanese patent application No. 2022-022636, filed on February 17, 2022, the disclosure of which is incorporated herein in its entirety by reference.

### REFERENCE SIGNS LIST

- 10: Cell stack body
- 20: Housing body
- 30A: First voltage detection device
- 30B: Second voltage detection device
- 40A: First fuse device
- 40B: Second fuse device
- 50: Battery module
- 100: Battery cell
- 100G: Cell group
- 102: Exterior material
- 104: Adhesive member
- 110: Lead portion
- 112: Positive lead
- 112T: Terminal positive lead
- 114: Negative lead
- 114T: Terminal negative lead
- 210: First cover member
- 220: Second cover member
- 230: Third cover member
- 240: Fourth cover member
- 250: Fifth cover member
- 260: Sixth cover member
- 300A: First holding body
- 300B: Second holding body
- 302A: First base
- 304A: Second space
- 310A: First voltage detection portion
- 310B: Second voltage detection portion
- 312A: First base end portion
- 312aA: First through hole
- 314A: First tip portion
- 316A: First connection portion
- 316aA: First barrel
- 318A: First ridge
- 320A: First voltage detection line
- 320B: Second voltage detection line
- 330A: First connector
- 330B: Second connector
- 340A: First shaft member
- 350A: First frame
- 350aA: Notch
- 350B: Second frame
- 352A: First edge portion
- 354A: Second edge portion
- 356A: Third edge portion
- 358A: Fourth edge portion
- 360A: First partition
- 400A: First conductor
- 402A: First space
- 410A: First extension body
- 412A: First wide portion
- 414A: Narrow portion
- 416A: Second wide portion
- 420A: Second extension body
- 432A: First fixture
- 434A: Second fixture
- 440A: First wiring
- 450A: Fastening hole
- X: First direction
- Y: Second direction
- Z: Third direction

## Claims

1. A voltage detection device comprising:
a voltage detection portion; and
a shaft member extending through a part of the voltage detection portion, wherein
the voltage detection portion includes a ridge located at least partially around a through hole of the voltage detection portion through which the shaft member extends.

2. The voltage detection device according to claim 1, further comprising
a structure opposite to at least a part of the voltage detection portion in a circumferential direction about the shaft member.

3. The voltage detection device according to claim 1 or 2, wherein
the through hole has a longitudinal direction in a direction crossing the shaft member.

4. A voltage detection device comprising:
a voltage detection portion;
a shaft member extending through a part of the voltage detection portion; and
a structure opposite to at least a part of the voltage detection portion in a circumferential direction about the shaft member.

5. A battery module comprising:
the voltage detection device according to any one of claims 1 to 4; and
at least one battery cell electrically connected to the voltage detection portion.
